# EUROPEAN PATENT SPECIFICATION

(11) **EP 3 546 296 B1**
(45) Date of publication and mention of the grant of the patent: **23.09.2020**
(21) Application number: 18164241.4
(22) Date of filing: 27.03.2018
(51) Int. Cl.: B60R 19/38, B60R 19/56

(54) **A REAR UNDERRUN PROTECTION DEVICE**
HECKUNTERFAHRSCHUTZVORRICHTUNG
DISPOSITIF DE PROTECTION ANTI-ENCASTREMENT ARRIÈRE

(43) Date of publication of application: 02.10.2019
(73) Proprietor: VBG Group AB (Publ), 461 34 Trollhättan (SE)
(72) Inventor: KALLIOKORPI, Miso, 461 34 TROLLHÄTTAN (SE); JANSSON, Robin, 461 34 TROLLHÄTTAN (SE)
(74) Representative: AWA Sweden AB

(56) References cited:
- EP-A1- 3 064 403
- EP-A1- 3 088 257
- WO-A1-03/055723
- WO-A1-2017/130015
- DE-A1- 19 928 104

## Description

### TECHNICAL FIELD OF THE INVENTION

The present invention relates to a rear underrun protection device for a towing vehicle.

### BACKGROUND OF THE INVENTION

Trucks and other large road vehicles are often equipped with some type of underrun protection device for preventing smaller vehicles from ending up under the truck in the event of a collision. There exist underrun protection devices for frontal, side and rear collisions, an example of the last-mentioned type being disclosed in WO 2017/130015.

Rear underrun protection devices usually have a transverse beam which is attached to a rear part of the truck via arms. The arms may be rotatable, thereby allowing the beam to be raised so that a trailer can be connected to the truck. In order to raise or lower the beam, the arms are first unlocked, then rotated and finally locked in the new position. A rather complicated series of movements is thus required to raise or lower the beam, something which makes this process not only time consuming and difficult to perform manually but also complicated to automate using motors.

It can be seen from the foregoing that there exists a need for a rear underrun protection device which can be raised and lowered more easily than typical prior art devices, preferably one which is robust and inexpensive to manufacture. There also exists a need for a rear underrun protection device, the raising and lowering of which can be motorized in a straightforward manner.

### SUMMARY OF THE INVENTION

It would be desirable to provide a rear underrun protection device which at least alleviates the above-discussed needs.

According to a first aspect of the present invention, there is provided a rear underrun protection device for a towing vehicle, the rear underrun protection device comprising:
an impact bar intended to be arranged such that a longitudinal extension of the impact bar extends laterally with respect to the towing vehicle;
two support arms, each arm having a first end portion mounted to the impact bar on different sides of a longitudinal center of the impact bar and a second end portion intended to be rotatably connected to the towing vehicle so that the support arms are rotatable around an axis of rotation;
at least one locking member configured to move between an engaged position, in which the locking member is intended to engage a structure of the towing vehicle, and a disengaged position, in which the locking member is intended to be disengaged from the towing vehicle, the locking member, when in use and in the engaged position, being adapted to lock one of the support arms in a first position, in which the impact bar is positioned to prevent another vehicle from running under the towing vehicle during a collision, and in a second position, in which the impact bar is positioned to allow a trailer to be connected to the towing vehicle; and
an operating assembly having a first point of engagement operatively connected to the locking member and a second point of engagement with the one of the support arms, the operating assembly comprising
a driver movable in a uniform direction and
a transmission arrangement configured to, upon a uniform movement of the driver:
   in a first phase, move the first point of engagement substantially parallel to the axis of rotation, to move the locking member to its disengaged position;
   in a second phase, move the second point of engagement around the axis rotation, to bring the one of the support arms to rotate between the first and second positions; and
   in a third phase, move the first point of engagement substantially parallel to the axis of rotation, to return the locking member to its engaged position.

According to a second aspect of the present invention, there is provided a towing vehicle comprising a rear underrun protection device according to the first aspect of the present invention.

By the term "substantially" is herein meant that the recited characteristic need not be achieved exactly, but that small deviations or variations, for example due to manufacturing tolerances, may occur.

It is noted that the operating assembly may have more than one first point of engagement and/or more than one second point of engagement. This may for example be the case if the rear underrun protection device has several locking members.

The inventive concept of the present invention is to, by means of a uniform movement, first unlock the arms, then raise or lower the arms, and finally lock the arms. Thereby, the impact bar can be moved between its different positions by a manoeuvre that is both easy to perform manually and straightforward to automate using a single motor.

In particular, automation is possible using simple electrical systems. For example, there is a reduced need for a plurality of controllers that help to synchronize the movements of the various components of the rear underrun protection device during raising and lowering of the impact bar.

Moreover, the above-described rear underrun protection device does not require a large number of components and can have a simple and robust design, so production and maintenance costs can be kept low.

The operating assembly may be adapted such that the driver experiences an increase in resistance during the uniform movement, the increase in resistance causing the transmission arrangement to transition from the first phase to the second phase. Such an operating member helps to make the transition between the phases fast and well defined.

The operating assembly may comprise a biasing arrangement adapted to provide the increase in resistance causing the transmission arrangement to transition from the first phase to the second phase. In addition, or alternatively, the biasing arrangement may be adapted to bias the locking member towards the engaged position. Such a biasing arrangement helps to stabilize the movement of the locking member.

The locking member may be a locking pin movable substantially parallel to the axis of rotation. The locking member may form part of the operating assembly, and the locking member may provide the second point of engagement. Thus, the locking member may be arranged so as to, in the second phase, engage one of the support arms and thereby bring that support arm to rotate. In such case, the rear underrun protection device can have a particularly simple design and a particularly low number of components.

The locking member may be operatively connected to a cam follower, and the driver may be operatively connected to a cam surface providing the first point of engagement. Such a cam-and-follower mechanism can be simple to manufacture and reliable in operation. The cam surface may have portions that are inclined relative to each other such that the cam surface cooperates with the biasing arrangement to provide the increase in resistance causing the transmission arrangement to transition from the first phase to the second phase. The driver may have a side wall substantially parallel with the axis of rotation, and the cam surface may be formed in the side wall.

The driver may be rotatable around a driver rotation axis substantially parallel to the axis of rotation. The uniform direction may then be a direction of rotation. The driver rotation axis may coincide with, or be arranged at a distance from, the axis around which the support arms are rotatable.

The locking member and the cam follower may be integrated with an annular part coaxial with the driver rotation axis. Such a rear underrun protection device can have a particularly small number of components and a particularly simple design. The annular part may rigidly connect several locking members to each other, so that the locking members are movable as a single unit. If the rear underrun protection device has several locking members, the locking members are typically rigidly connected so that all of them move if one of them moves. Of course, the locking members may be rigidly connected to each other in some other way than via the annular part.

The operating assembly may comprise a ring gear rotatable around the driver rotation axis, wherein the ring gear is engaged with a gear member adapted to be fixed to the structure of the towing vehicle, wherein the ring gear is arranged so that the driver rotation axis moves when the ring gear rotates, and wherein the second point of engagement is located along said driver rotation axis. Such a rear underrun protection device may have a particularly robust design. The ring gear may form part of a planetary gear set connected to move the ring gear in a direction opposite to the rotational movement of the driver.

The driver may be a linear actuator. The uniform direction may then be a direction of a linear movement. The driver may be arranged to create a linear movement of a first point relative to a second point, the first point being intended to be stationary relative to the structure of the towing vehicle, and the second point being arranged to move together with the one of the support arms during the second phase.

The rear underrun protection device may comprise at least one motor connected to move the driver in the uniform direction. As mentioned above, the rear underrun protection device according to the first aspect of the present invention is particularly suitable for motorization. The rear underrun protection may alternatively, or additionally, be adapted such that the driver can be moved in the uniform direction manually.

The rear underrun protection device may comprise two locking members, one for each of the support arms, and two corresponding operating assemblies.

### BRIEF DESCRIPTION OF THE DRAWINGS

The present invention will be described in more detail with reference to the appended drawings which show currently preferred embodiments of the invention.
Figures 1a and 1b show perspective views of a part of a towing vehicle equipped with a rear underrun protection device according to a first embodiment of the present invention.
Figure 2 shows an exploded view of some components of the rear underrun protection device shown in Figures 1a and 1b.
Figures 3a and 3b show side views of some of the components shown in Figure 2.
Figure 4 shows an exploded view of a rear underrun protection device according to a second embodiment of the present invention.
Figure 5 shows a perspective view of a rear underrun protection device according to a third embodiment of the present invention.
Figures 6a, 6b and 6c show schematic side views of some components of the rear underrun protection device in Figure 5.
Figure 7 shows a schematic side view of a rear underrun protection device according to a fourth embodiment of the present invention.
Figure 8 shows a schematic perspective view of some components of the rear underrun protection device in Figure 7.
Figures 9a and 9b show schematic perspective views of some components of a rear underrun protection device according an embodiment of the present invention.

### DETAILED DESCRIPTION OF CURRENTLY PREFERRED EMBODIMENTS

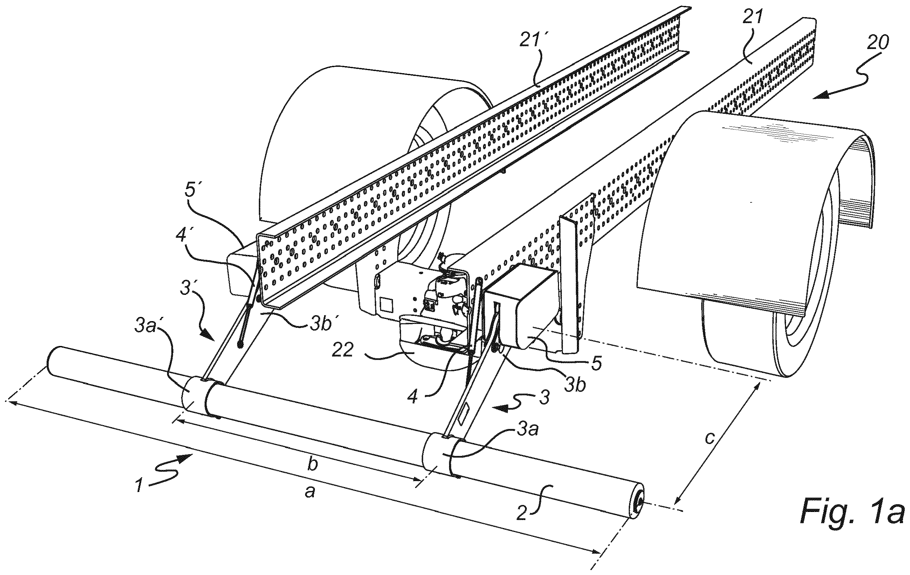

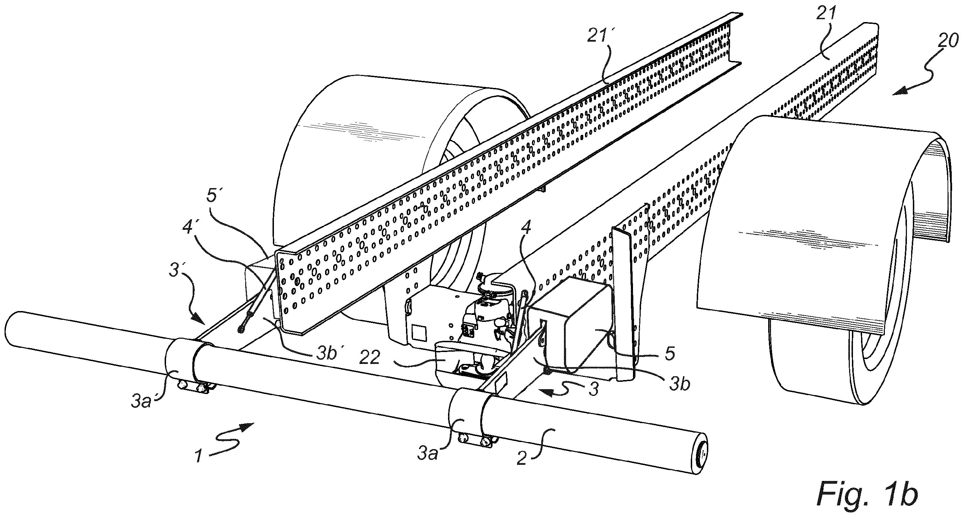

Figures 1a and 1b show a rear underrun protection device 1 which is mounted to the rear part of a towing vehicle 20. The towing vehicle 20 is in this case is a motorized truck. It should, however, be noted that also an intermediate trailer, i.e. a trailer which is pulled by a motorized truck and which in turn pulls a subsequent trailer, is a towing vehicle in the sense used herein.

The rear underrun protection device 1 comprises an impact bar 2, henceforth referred to as the "bar" for brevity. In the illustrated example, the bar 2 is elongated and straight, and the transverse cross-section of the bar 2 is circular. In a different example, however, the bar 2 may be curved and/or have a different cross-section, such as a rectangular cross-section. The bar 2 is arranged so as to be substantially horizontal when the towing vehicle 20 is standing on horizontal ground. The longitudinal extension of the bar 2 is arranged laterally with respect to the towing vehicle 20. Stated differently, the bar 2 is arranged so as to extend substantially transversely to the direction of straight forward travel of the towing vehicle 20. Usually, the length a of the bar 2 is such that the bar 2 extends substantially from one longitudinal side of the towing vehicle 20 to the other. By the longitudinal sides of the towing vehicle 20 is here meant the sides of the towing vehicle 20 that are parallel to the direction of straight forward travel of the towing vehicle 20. This means in practice that the length a of the bar 2 is typically less than 3 m. The bar 2 is preferably made of a hard material, so that the bar 2 does not easily yield under a force imparted thereon by a vehicle colliding with the towing vehicle 20 from behind. The bar 2 may for example be made of a metal, such a steel.

The bar 2 is supported by two support arms 3, 3' which will henceforth be referred to as the "arms" for brevity. The illustrated arms 3, 3' are elongated and straight, and both arms 3, 3' have the same shape. However, the arms 3, 3' are not limited to such a shape, and nor do the arms 3, 3' necessarily have to have the same shape. The arms 3, 3' may for example be curved. The arms 3, 3' are arranged substantially parallel to each other and to the longitudinal sides of the towing vehicle 20. The distance b between the arms 3, 3' varies depending on the application. The length c of the arms 3, 3' also varies depending on the application, but is typically less than 1 m. The arms 3, 3' are preferably made of a hard material, so that the arms 3, 3' do not easily yield under a force imparted thereon by a vehicle colliding with the towing vehicle 20 from behind. The arms 3, 3' may for example be made of steel or some other metal.

As mentioned above, the arms 3, 3' support the bar 2. Specifically, each arm 3, 3' has a first end portion 3a, 3a' which in this case is rigidly mounted to the bar 2. The arms 3, 3' and the bar 2 thus form a rigid structure. The first end portions 3a, 3a' are mounted to the bar 2 on different sides of the longitudinal center thereof. In this case, the first end portions 3a, 3a' are symmetrically arranged with respect to the longitudinal center of the bar 2. Further, in this case, the bar 2 extends beyond the first portions 3a, 3a', toward the longitudinal sides of the towing vehicle 20. So the distance b between the arms 3, 3' is here less than the length a of the bar 2. More specifically, the distance b is here slightly longer than a third of the length a.

It should be noted that the bar 2 does not have to be rigidly mounted to the first end portions 3a, 3a'. The bar 2 is usually mounted so as not to be able to move vertically and horizontally relative to the first end portions 3a, 3a'. However, it may in some applications be desirable that the bar 2 be rotatable around its longitudinal axis, because it is then possible to have the same side of the bar 2 face straight backwards in both the low position and the high position (the low and high positions will be further discussed below).

Each arm 3, 3' further has a second end portion 3b, 3b'. The two second end portions 3b, 3b' are rotatably connected to a respective beam 21, 21' of the towing vehicle 20. The two beams 21, 21' extend along the longitudinal sides of the towing vehicle 20 and are arranged on different sides of a longitudinal center line of the towing vehicle 20. It should be noted that, in a different example, the towing vehicle 20 may, instead of the beams 21, 21' illustrated herein, have some other type of structure to which the second end portions 3b, 3b' are rotatably connected.

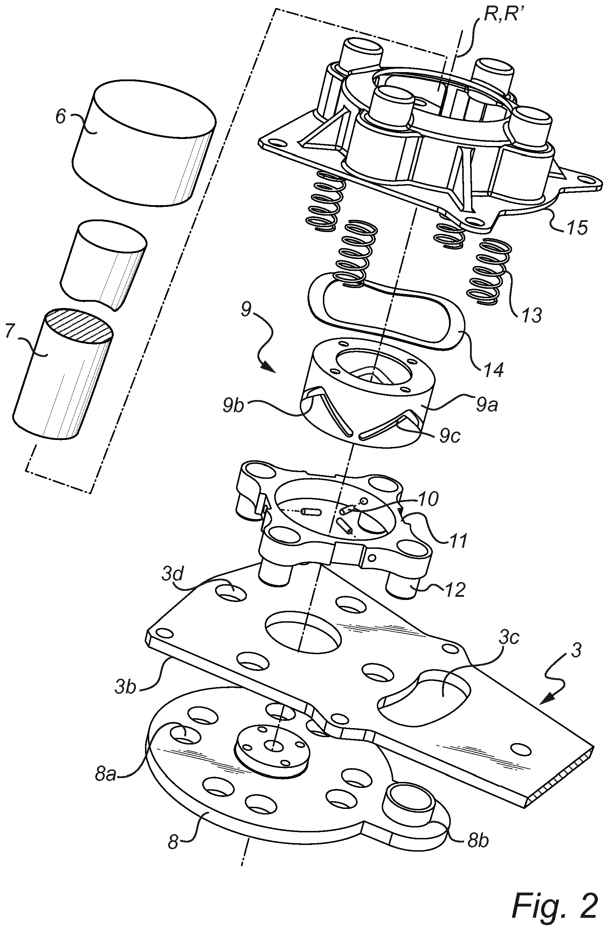

The second end portions 3b, 3b' are rotatably connected to the beams 21, 21' such that the arms 3, 3' are movable between a first position (see Figure 1a) and a second position (see Figure 1b). The arms 3, 3' are rotatable around the same axis of rotation R (see Figures 2 to 3b, further discussed below). The axis of rotation R here refers to a geometrical axis. When the arms 3, 3' are in the first position, the bar 2 is positioned to prevent another vehicle from running under the towing vehicle 20 during a collision. When the arms 3, 3' are in the second position, the bar 2 is positioned to allow a trailer to be connected to a coupling 22 of the towing vehicle 20. In the following, the first position and the second position will be referred to as the low position and the high position, respectively.

The rear underrun protection device 1 further comprises two optional actuators 4, 4' mechanically connected to a respective arm 3, 3' and to the towing vehicle 20. More precisely, each actuator 4, 4' is mechanically connected to one of the arms 3, 3' and the beam 21, 21' to which that arm 3, 3' is mounted. The actuators 4, 4' are mechanically connected to a point approximately at the longitudinal center of the arms 3, 3'. The actuators 4, 4' may, for example, be springs or cylinders, such as hydraulic cylinders or pneumatic cylinders. Thus, the rear underrun protection device 1 may comprise at least one actuator 4, 4' arranged to help to move the arms 3, 3' between the first position and the second position, the at least one actuator 4, 4' being connected to one of the arms 3, 3' and connectable to the towing vehicle 20. The actuators 4, 4' facilitate the raising and the lowering of the bar 2 and, thereby, reduces the load on the lifting mechanisms 5, 5' (further discussed below) so that the wear thereon is reduced.

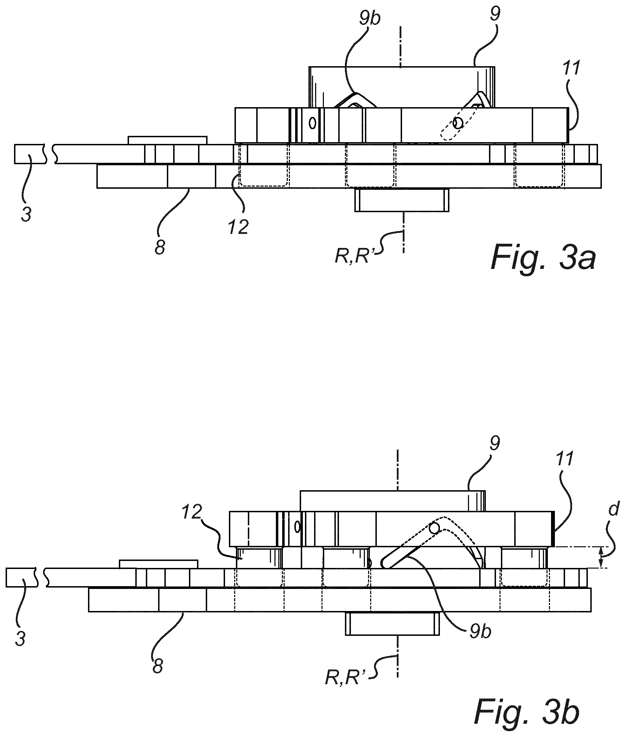

The rear underrun protection device 1 further comprises two lifting mechanisms 5, 5' configured to raise and lower the bar 2. Each lifting mechanism 5, 5' is located at a respective one of the second end portions 3b, 3b'. In Figures 1a and 1b, the lifting mechanisms 5, 5' are illustrated with housings for protection against dirt, water, etc. Figures 2, 3a and 3b show the right lifting mechanism 5 in Figures 1a and 1b without the housing to reveal some of its inner components. The left lifting mechanism 5' in Figures 1a and 1b is similar to the right one and will therefore not be described in detail.

The lifting mechanism 5 comprises a motor 6, which is schematically illustrated in Figure 2. The motor 6 is in this case an electric motor, but it is possible to use other types of motors or actuators. The motor 6 is mounted to an axle 7. The axle 7 is here rigidly mounted to a plate 8 which, in turn, is rigidly mounted to the beam 21 of the towing vehicle 20 shown in Figures 1a and 1b. The illustrated plate 8 has seats 8a formed by openings in the plate 8 and a protrusion 8b which extends into an elongated hole 3c in the arm 3.

It should be noted that the seats 8a may be formed by, for example, indentations in the plate 8 instead of openings extending through the plate 8. Further, the seats 8a may form part of the beam 21, or some other structure of the towing vehicle 20, instead of the plate 8. In such case, the plate 8 may be omitted.

The lifting mechanism 5 further comprises a driver 9 which is rotatable around a driver rotation axis R'. The driver 9 has in this case a cylindrical hollow body. The driver rotation axis R' is here a central axis of the driver 9. The driver rotation axis R' here refers to a geometrical axis. The driver rotation axis R' is substantially horizontal when the towing vehicle 20 is standing on horizontal ground. A side wall 9a of the driver 9 is substantially parallel with the driver rotation axis R'. The side wall 9a is here circular. The axle 7 passes through the hollow body of the driver 9 and coincides with the driver rotation axis R'. The driver 9 is rotatably mounted to the axle 7. The motor 6 is connected to rotate the driver 9 around the driver rotation axis R'. We herein say that the driver 9 moves in a uniform direction when rotating clockwise or counterclockwise around the driver rotation axis R'.

It is noted that the driver rotation axis R' in this case coincides with the axis of rotation R of the arms 3, 3'. In the following, we will refer to the axis of rotation R of the arms 3, 3' as the axis R, for brevity, while keeping in mind that the driver rotation axis R' in this case coincides therewith.

The driver 9 is provided with several slits 9b. More precisely, the illustrated driver 9 has three slits 9b formed in the side wall 9a. The slits 9b passes through the body of the driver 9. Each slit 9b forms a cam surface 9c, so three cam surfaces 9c are in this case formed in the side wall 9a of the driver 9. The cam surfaces 9c and the driver 9 are therefore operatively connected. The cam surfaces 9c are oriented so as to face away from the arm 3. The slits 9b and the cam surfaces 9c are in this case curved. More precisely, the slits 9b and the cam surfaces 9c are V-shaped.

It should be noted that the driver 9, the slits 9b and the cam surfaces 9c can be implemented in a variety of ways and do not have to be exactly as illustrated in Figure 2. For example, the driver 9 may be solid instead of hollow and the number of slits 9b, as well as the number of cam surfaces 9c, may be smaller or greater than three. Further, the cam surfaces 9c do not have to be oriented so as to face away from the arm 3. Still further, the slits 9b and the cam surfaces 9c are not limited to being V-shaped. Other shapes, such as U-shapes or irregular shapes, are conceivable. Also, instead of being formed by slits, the cam surfaces 9c may be formed by grooves in the side wall 9a of the driver 9.

The lifting mechanism 5 further comprises three cam followers 10. Thus, the number of cam followers 10 is in this case, as is typical, equal to the number of cam surfaces 9c. In the illustrated example, the cam followers 10 are projections extending in a direction substantially perpendicular to the axis R. Each cam follower 10 extends into one of the slits 9b, thereby contacting a cam surface 9c. Thus, each cam follower 10 engages a respective one of the cam surfaces 9c.

The cam followers 10 are in this case integrated with an annular part 11 which is coaxial with the axis R. The annular part 11 here encircles the driver 9. The annular part 11 is rotatable about the axis R. Four locking members 12 are integrated with the annular part 11. The locking members 12 and the cam followers 10 are rigidly connected via the annular part 11. Since the annular part 11 is rotatable about the axis R, the locking members 12 and the cam followers 10 are also rotatable about the axis R. The locking members 12 are in this case locking pins extending parallel to the axis R. It should be noted that the locking members 12 do not have to be pins and that the number thereof may be less than or more than four in a different example.

The locking members 12 have an engaged position (see Figure 3a) and a disengaged position (see Figure 3b). The locking members 12 move a distance d (see Figure 3b) parallel to the axis R to get from the engaged position to the disengaged position, and vice versa. The distance d may for example be in the centimeter range.

In the engaged position, the locking members 12 engage with a structure of the towing vehicle 20 in such a manner that the arm 3 cannot rotate about the axis R. Specifically, in this case, each locking member 12 extends through an opening 3d in the arm 3 and into one of the seats 8a of the plate 8. The plate 8 is, as mentioned above, rigidly mounted to the beam 21. The locking members 12 are thus received by the seats 8a when the locking members 12 are in the engaged position.

In the disengaged position, the locking members 12 are disengaged from the structure of the towing vehicle 20. Specifically, in this case, the locking members 12 extend into the openings 3d in the arms 3, but not into the seats 8a of the plate 8. Consequently, the locking members 12 can rotate about the axis R, and will then push the arm 3 so that the arm 3, too, rotates about the axis R.

The lifting mechanism 5 further comprises a biasing arrangement. In this case, the biasing arrangement comprises a first biasing member 13 and a second biasing member 14. A cover 15 of the lifting mechanism 5 acts as an abutment for the first and second biasing members 13, 14. The first biasing member 13 here comprises four coil springs. Each coil spring is arranged to bias one of the locking members 12 towards its engaged position by pushing the locking member 12 towards its seat 8a. The second biasing member 14 here comprises a wave spring. The wave spring 14 is arranged around the driver 9 and to push the annular part 11, during the second phase (further described below), towards the arm 3. Thereby, the second biasing member 14 biases each locking member 12 towards its engaged position. The second biasing member 14 has in this case a different spring constant than the first biasing member 13. Specifically, the spring constant of the second biasing member 14 is in this case greater than the spring constant of the first biasing member 13.

It should be noted that the first and second biasing members 13, 14 can be implemented in a variety of ways. For example, the first and second biasing members 13, 14 do not have to be springs but could instead be formed by pieces of elastic materials, such as rubber. Further, the biasing arrangement may include only one biasing member, so the first biasing member 13 or the second biasing member 14 may be omitted.

The choice of material for the components of the lifting mechanism 5 vary depending on the application. The plate 8, the driver 9 and the locking members 12 are usually made of one or more metals, such as steel, or some other hard and wear-resistant material(s). The sizes and dimensions of the components of the lifting mechanism 5 also vary depending on the application.

The cam surfaces 9c, the cam followers 10 and the annular part 11 may here be seen as forming part of a transmission arrangement. The transmission arrangement, the biasing arrangement 13, 14, the driver 9 and the locking members 12 may be seen as forming part of an operating assembly. The operating assembly has first points of engagement operatively connected to the locking members 12 and second points of engagement with the arm 3. The first points of engagements are in this case between the cam surfaces 9c and the cam followers 10. The first points of engagement are here operatively connected to the locking members 12 via the cam followers 10 and the annular part 11. The second points of engagement are in this case between the locking members 12 and the arm 3, at the openings 3d in the arm 3.

The operation of the lifting mechanism in Figures 2, 3a and 3b when the bar 2 is raised will now be described with reference to three phases. The operation of the lifting mechanism 5 during lowering of the bar 2 is analogous. The bar 2 is in this case raised by a rotation of the driver 9.

In the first phase, the locking members 12 move along the axis R, from their engaged positions to their disengaged positions. Specifically, assuming that the bar 2 is locked in its low position (see Figure 1a) by the locking members 12, a person, such as the driver of the towing vehicle 20, may raise the bar 2 by starting the motor 6 using for example a control unit (not shown) connected to control the motor 6. The control unit may for example include a button or a knob for raising the bar 2 inside the driver's compartment of the towing vehicle 20. The motor 6 then rotates the driver 9 around the axis R. The cam followers 10 ride on the cam surfaces 9c of the rotating driver 9, whereby the locking members 12 move along the axis R away from the arm 3 while compressing the first biasing member 13 but not the second biasing member 14. The locking members 12 are initially in their engaged positions, in which they are received by the seats 8a and, therefore, cannot rotate about the axis R. Eventually, the locking members 12 reach their disengaged positions, in which they are no longer received by the seats 8a. The cam surfaces 9c are in this case designed so that the cam followers 10 have not yet reached the points where the two "legs" of the V-shaped cam surfaces 9c meet because that position is typically unstable. The cam surfaces 9c may for example be designed so that the cam followers 10 are approximately in the middle of the "legs" when the locking members 12 reach their disengaged positions.

Next, in the second phase, the continued rotation of the driver 9 causes the locking members 12 to rotate around the axis R. The rotating locking members 12 push the arm 3 to rotate until the latter reaches the high position (see Figure 1b) and cannot be rotated any further. In the illustrated example, the protrusion 8b of the plate 8 moves in the elongated hole 3c of the arm 3 when the arm 3 rotates. The arm 3 stops when the protrusion 8b abuts against an end of the elongated hole 3c. Of course, other types of stopping arrangements for ensuring that the arm 3 stops rotating after having reached the high (or the low) position may be used.

Hence, in the second phase, the locking members 12 rotate around the axis R while engaging the arm 3, thereby rotating the arm 3 from the low position to the high position. The locking members 12 rotate around the axis R, instead of translates therealong, because, in the second phase, both the first biasing member 13 and the second biasing member 14 (via the annular part 11) bias the locking members 12. This makes the resistance which the locking members 12 must overcome in order to translate greater than the resistance which they must overcome in order to rotate. Hence, the biasing arrangement 13, 14 is in this case adapted to bias the locking members 12 with a larger force in the second phase than in the first phase. Stated differently, the biasing arrangement is arranged such that the driver 9 experiences an increase in resistance when rotating, the increase in resistance causing the transition from the first phase to the second phase.

It should be noted there are other ways of ensuring that the translation resistance is greater than the rotation resistance in the second phase. For example, this can be achieved by means of a single spring and/or by arranging a protuberance where the two "legs" of the V-shaped cam surfaces 9c meet, so that some extra force is required to move the cam followers 10 from one "leg" to the other. This can also be achieved by providing the cam surfaces 9c with several portions that are inclined relative to each other. By providing the cam surfaces 9b with such portions, the cam surfaces 9c may be adapted to cooperate with the biasing arrangement to vary a resistance acting on the driver 9 during the three phases.

In the third phase, the locking members 12 move along the axis R, from their disengaged positions to their engaged positions. Specifically, when the arm 3 has reached the high position and stopped, the locking members 12 move along the axis R away from the arm 3, compressing both biasing members 13, 14 a bit more, until the cam followers 10 reach the points where the two "legs" of the V-shaped slits 9b meet. The cam followers 10 then continue over to the other "legs", and the locking members 12 start to move towards the arm 3. The locking members 12 are pushed towards the arm 3 by the both biasing members 13, 14 at first and, after a while, only by the first biasing member 13. When the locking members 12 have been received by the seats 8a, they have reached their engaged positions. The arm 3 is now locked and the bar 2 is in the high position.

It can be understood from the foregoing that (i) the first points of engagement move substantially parallel to the axis R during the first and third phases and (ii) the second points of engagement move around the axis R during the second phase.

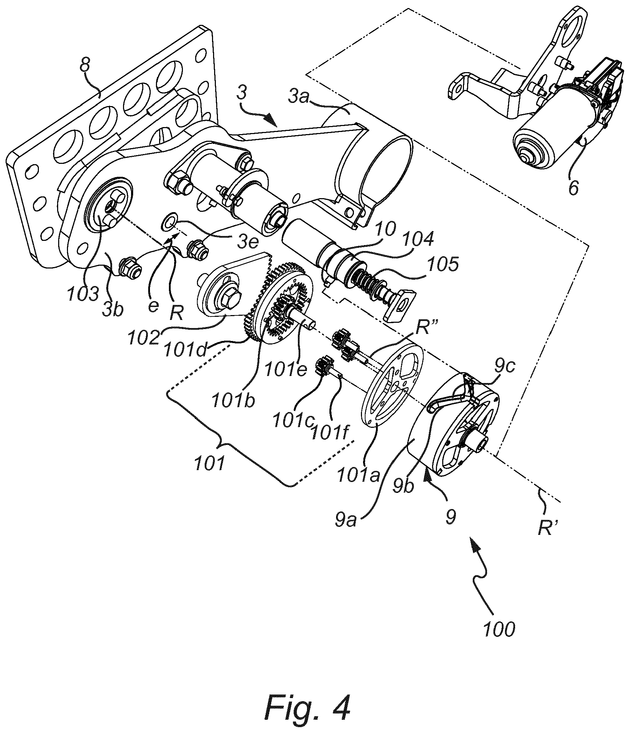

With reference to Figure 4, a rear underrun protection device 100 according to a second embodiment of the present invention will be described. It should be noted that the rear underrun protection device 100 in Figure 4 has several features in common with the rear underrun protection device 1 in Figures 1 to 3b, and some of these features will not be discussed, or only briefly discussed, in the following. Moreover, many of the modifications and variations mentioned in the discussion above of the rear underrun protection devices 1 in Figures 1 to 3b are applicable also to the rear underrun protection device 100 in Figure 4.

The rear underrun protection device 100 comprises an optional motor 6 which is connected to rotate a driver 9 around a driver rotation axis R', henceforth referred to as the axis R'. The driver 9 in Figure 4 is similar to the driver in Figures 2 to 3b. The driver 9 in Figure 4 is, however, operatively connected to only one cam surface 9c. The cam surface 9c is formed in a V-shaped slit 9b in the side wall 9a of the driver 9.

The driver 9 is in this case operatively connected to a planetary gear set 101. The illustrated planetary gear set 101 is of a conventional type known in the art. The planetary gear set 101 is here arranged partly inside the driver 9. The planetary gear set 101 here comprises a disc 101a, a central sun gear 101b, three intermediate planet gears 101c and an outer ring gear 101d. The sun gear 101b is arranged on the axis R'. The planet gears 101c are arranged at a radial distance from the axis R', between the sun gear 101b and the ring gear 101d. The ring gear 101d is centered on and rotatable about the axis R'. The sun gear 101b meshes with the planet gears 101c which mesh with the ring gear 101d. Specifically, the planet gears 101c mesh with inner teeth of the ring gear 101 d. As can be seen in Figure 4, the ring gear 101d has inner teeth, which are arranged on a side of the ring gear 101d facing the axis R', and outer teeth, which are arranged on a side of the ring gear 101d facing away from the axis R'. The inner teeth and the outer teeth are displaced relative to each other along the axis R'.

The sun gear 101b is rotatable about the axis R'. The motor 6 is here connected to rotate the sun gear 101b about the axis R'. The motor 6 and the sun gear 101b are in this case connected via a pin 101e integrated with the sun gear 101b. The pin 101e extends through an opening in the driver 9 and connects to the motor 6. A bearing (not shown) between the pin 101e and the driver 9 enables the pin 101e to rotate relative to the driver 9. It follows that the sun gear 101b is rotatable relative to the driver 9.

The planet gears 101c are movable along a circle centered on the axis R'. Each planet gear 101c is also rotatable about its central axis R". As can be seen in Figure 4, each planet gear 101c has in this case a pin 101f integrated therewith. These pins 101f are rotatably attached to the disc 101a which is fixed to the driver 9. Thus, the planet gears 101c are here connected to the driver 9 in such a manner that (i) each planet gear 101c is rotatable about its central axis R" relative to the driver 9 and (ii) the planet gears 101c rotate the driver 9 about the axis R' when the planet gears 101c move along the circle centered on the axis R' (and vice versa).

The planetary gear set 101 is rotatably attached to an arm 3 for supporting, at a first end portion 3a thereof, an impact bar (not shown). Specifically, the pin 101e is here rotatably attached to the arm 3 via an attachment 3e. The arm 3 is rotatably mounted, at a second end portion 3b thereof, to a plate 8 intended to be mounted to a structure of a towing vehicle. The arm 3 is arranged between the plate 8 and the planetary gear set 101. The arm 3 is rotatable about an axis of rotation R which in this case is substantially parallel to and spatially separated from the driver rotation axis R'. Thus, the axis of rotation R of the arm 3 and the driver rotation axis R' do not coincide in this case. The axis of rotation R of the arm 3 will henceforth be referred to as the axis R. The distance e between the axis R and the axis R' may for example be in the decimeter range. The axis R is here substantially parallel to the side wall 9a of the driver 9.

A gear member 102 is arranged on the same side of the arm 3 as the planetary gear set 101. The gear member 102 mesh with the ring gear 101 d. More precisely, the gear member 102 mesh with the outer teeth of the ring gear 101 d. The gear member 102 has in this case the shape of a sector of a circle, which is centered on the axis R and the diameter of which is larger than the diameter of the ring wheel 101 d. The size of the gear member 102 and the size of the ring gear 101 d are chosen based on, for example, the desired transmission ratio. Further, the gear member 102 is fixed to the plate 8 via an axle 103. The axle 103 is centered on the axis R and passes through an opening in the arm 3. A bearing (not shown) enables the arm 3 to rotate relative to the axle 103. The arm 3 is thus rotatable relative to the gear member 102.

The rear underrun protection device 100 further comprises a cam follower 10 which engages the cam surface 9c. In this case, the cam follower 10 is formed by a projection sticking into the slit 9b. The cam follower 10 is in this case integrated with a locking member 104. The cam follower 10 and the locking member 104 are therefore operatively connected to each other. The locking member 104 is in this case a locking pin. The locking member 104 is arranged adjacent to the driver 9. The locking member 104 is arranged at a distance from the driver 9 in a direction perpendicular to the axis R. The locking member 104 is movable parallel to the axis R between an engaged position and a disengaged position. In the engaged position, the locking member 104 in this case extends through an opening (not shown) in the arm 3 and engages with a seat (not shown) in the plate 8 so as to prevent the arm 3 from rotating about the axis R. In the disengaged position, the locking member 104 does not engage with the plate 8 and also does not extend through the arm 3. Accordingly, the arm 3 can rotate about the axis R when the locking member 104 is in the disengaged position.

The rear underrun protection device 100 further comprises a biasing arrangement 105. The biasing arrangement 105 is here arranged to bias the locking member 104 towards its engaged position. The biasing arrangement 105 illustrated in Figure 4 includes a spring.

The planetary gear set 101, the cam surface 9c and the cam follower 10 may be seen as forming part of a transmission arrangement. The transmission arrangement, the biasing arrangement 105 and the driver 104 may be seen as forming part of an operating assembly. The operating assembly has a first point of engagement operatively connected to the locking member 104 and a second point of engagement with the arm 3. The first point of engagement is in this case between the cam surface 9c and the cam follower 10. The first point of engagement is operatively connected to the locking member 104 via the cam follower 10. The second point of engagement is in this case between the pin 101e and the arm 3, at the attachment 3e. The second point of engagement is located along the axis R'.

The operation of the rear underride protection device 100 in Figure 4 during raising and lowering of the arm 3 will be described below with reference to three phases. It will be assumed that the arm 3 is initially locked in its low position, and the terms clockwise and counterclockwise are in reference to a view directed along the axis R' towards the left in Figure 4.

In the first phase, the locking member 104 moves parallel to the axis R', from its engaged position to its disengaged position. Specifically, the motor 6 rotates the sun gear 101b clockwise about the axis R'. There is at this point less resistance to compress the biasing arrangement 105 than to raise the arm 3, and as a result the driver 9 rotates while the ring gear 101d does not. More precisely, the rotation of the sun gear 101b causes the planet gears 101c to move clockwise along the circle centered on the axis R', while the ring gear 101d does not rotate. The rotation of the planet gears 101c causes the driver 9 to rotate clockwise about the axis R'. The cam follower 10 rides on the rotating cam surface 9c, whereby the locking member 104 moves linearly away from the arm 3 while compressing the biasing arrangement 105. The resistance to compress the biasing arrangement 105 increases as it is compressed. Eventually, the resistance to compress the biasing arrangement 105 becomes greater than the resistance to rotate the ring gear 101d. By then the locking member 104 has reached its disengaged position.

In the second phase, the arm 3 is rotated about the axis R from its low position to its high position. Specifically, the motor 6 continues to rotate the sun gear 101b clockwise about the axis R'. Since there is now less resistance to rotate the ring gear 101d than to compress the biasing arrangement 105, the ring gear 101d rotates while the driver 9 does not. More precisely, the rotation of the sun gear 101b now causes each planet gear 101c to rotate counterclockwise about its central axis R". The rotating planet gears 101c cause the ring gear 101d to rotate counterclockwise about the axis R'. The rotation of the ring gear 101d makes it "climb" upwards on the gear member 102. This brings the arm 3 to rotate counterclockwise about the axis R. The arm 3 rotates until it reaches the high position, at which point it cannot rotate any further. It is noted that the axis R' moves as the ring gear 101d rotates, in this case along an arc-shaped path.

In the third phase, the locking member 104 moves parallel to the axis R', from its disengaged position to its engaged position. Specifically, the motor 6 continues to rotate the sun gear 101b clockwise about the axis R'. The ring gear 101d cannot continue to rotate counterclockwise about the axis R', since the arm 3 is in its high position, so the driver 9 now rotates instead of the ring gear 101d. More precisely, the rotation of the sun gear 101b causes the planet gears 101c to move clockwise along the circle centered on the axis R'. This brings the driver 9 to rotate clockwise about the axis R'. The cam follower 10 rides on the rotating cam surface 9c, whereby the locking member 104 first moves linearly away from the arm 3, compressing the biasing arrangement 105 a bit further. Then, when the cam follower 10 passes over to the other "leg" of the V-shaped cam surface 9c, the locking member 104 starts to move linearly towards the arm 3. Eventually, the locking member 104 reaches its engaged position and the motor 6 stops. The arm 3 is now locked in its high position.

From the foregoing, it can be understood that (i) the first point of engagement moves, during the first and third phases, substantially parallel to the axis R, and (ii) the second point of engagement moves, during the second phase, around the axis R. Further, it is clear that, in this case, the planetary gear set 101 is connected to rotate the ring gear 101d in a direction opposite to the rotational movement of the driver 9, because the ring gear 101 d rotates counterclockwise during the second phase while the driver 9 rotates clockwise during the first and third phases.

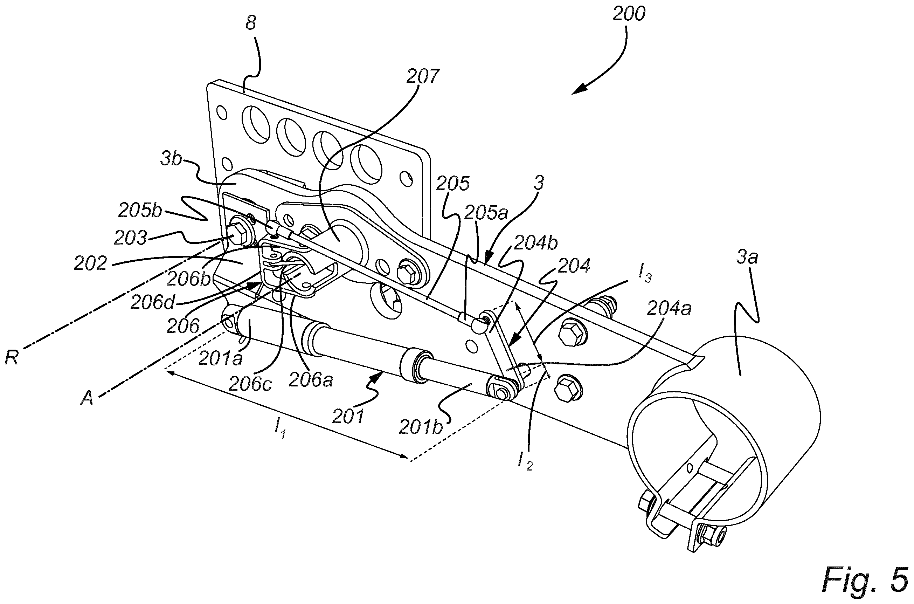

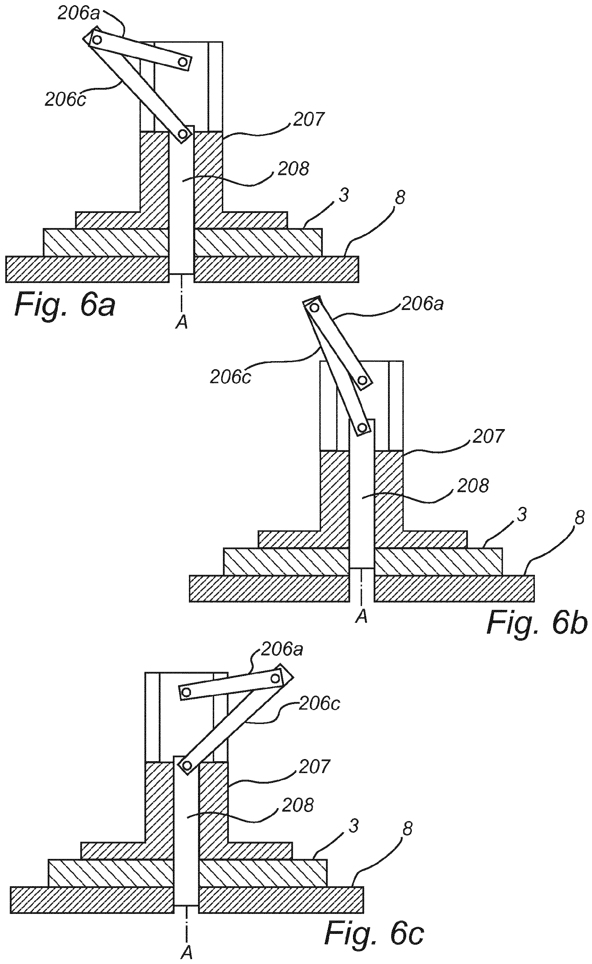

With reference to Figures 5, 6a, 6b and 6c, a rear underrun protection device 200 according to a third embodiment of the present invention will be described. It should be noted that the rear underrun protection device 200 in Figures 5 to 6c has several features in common with the rear underrun protection devices 1, 100 in Figures 1 to 4, and some of these features will not be discussed, or only briefly discussed, in the following. Moreover, many of the modifications and variations mentioned in the discussion above of the rear underrun protection devices 1, 100 in Figures 1 to 4 are applicable also to the rear underrun protection device 200 in Figures 5 to 6c.

The rear underrun protection device 200 comprises two arms which are similar to those of the rear underrun protection devices 1, 100 in Figures 1 to 4. Only one of the arms is shown in Figure 5, and that arm is designated by the reference numeral 3. The arm 3 has a first end portion 3a where the impact bar (not shown) can be mounted. At a second end portion 3b, the arm 3 is here rotatably connected to a plate 8 intended to be mounted to a structure of a towing vehicle (not shown). The arm 3 is rotatable around an axis of rotation R, henceforth referred to as the axis R.

The rear underrun protection device 200 further comprises a driver 201 in the form of a linear actuator. The driver 201 here comprises a cylinder, such as a hydraulic cylinder or pneumatic cylinder. The driver 201 is here arranged on a different side of the arm 3 than the plate 8. As can be seen in Figure 5, the driver 201 is here elongated and straight.

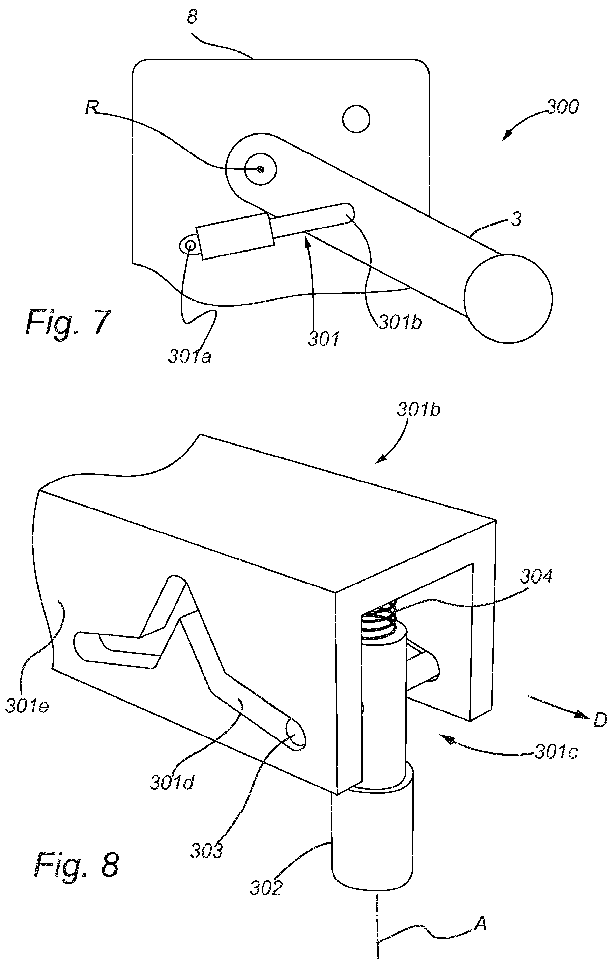

A first end portion 201a of the driver 201 is arranged close to the second end portion 3b of the arm 3. The first end portion 201a of the driver 201 is here pivotably connected at a point which is fixed relative to the plate 8. More specifically, in this case, the first end portion 201a is pivotably connected to a curved plate 202 which is attached to the plate 8. The curved plate 202 is here attached to the plate 8 via a bolt 203 arranged on the axis R. The bolt 203 runs through respective holes in the curved plate 203 and the second end portion 3b of the arm 3 which is sandwiched between the plate 8 and the curved plate 202. Of course, there are other ways in which the driver 201 can be pivotably connected at a point which is fixed relative to the plate 8 than the one illustrated in Figure 7.

The driver 201 extends from its first end portion 201a generally towards the first end portion 3a of the arm 3. A second end portion 201b of the driver 201 is pivotably connected to a lever 204. The lever 204 is here elongated and straight. The second end portion 201b of the driver 201 is pivotably connected to the lever 204 at a first end portion 204a of the lever 204.

The driver 201 is in this case extendable and retractable. So the length I₁ of the driver 201 is variable. The driver 201 has an extended position and a retracted position. The length I₁ of the driver 201 is longer in the extended position than in the retracted position. In Figure 5, the driver 201 is depicted in the extended position. The driver 201 is arranged so as to move substantially parallel to a plane when extending and retracting. The rear underrun device 200 here comprises a motor (not shown) arranged to extend and retract the driver 201, but the driver 201 may in a different example be configured to be extended and retracted manually.

When the driver 201 extends or retracts, the first and second end portions 201a, 201b of the driver 201 perform a linear movement relative to each other. We herein say that the driver 201 moves in a uniform direction when going from the extended position to the retracted position, or vice versa. The uniform direction is in this case a direction of a linear movement.

The lever 204 has a second end portion 204b opposite to the first end portion 204a. A rod 205 is pivotably connected to the lever 204 at the second end portion 204b. The lever 204 is pivotably connected to the arm 3 between the first and second end portions 204a, 204b of the lever 204. The connection between the lever 204 and the arm 3 is located between the first and second end portions 3a, 3b of the arm 3. The distance between the lever's 204 connection with the driver 201 and the lever's 204 connection with the arm 3 is denoted by I₂ in Figure 5. The distance between the lever's 204 connection with the rod 205 and the lever's 204 connection with the arm 3 is denoted by I₃ in Figure 5. The distance I₃ is here greater than the distance I₂. Thereby, when the driver 201 extends or retracts so that the first end portion 204a of the lever 204 moves by a certain amount, the second end portion 204b of the lever 204b moves by a greater amount.

The rod 205 is in this case elongated and straight. As mentioned above, the rod 205 is pivotably connected to the lever 204. More specifically, a first end portion 205a of the rod 205 is pivotably connected to the second end portion 205b of the lever 204. A second end portion 205b of the rod 205 is pivotably connected to a tiltable member 206. The tiltable member 206 is pivotably connected to a housing 207 attached to the arm 3 at the second end portion 3b of the arm 3. In Figure 5, a part of the housing 207 has been removed in order to show some of the interior of the housing 207. In this case, the tiltable member 206 has three legs 206a, 206b, 206c connected via a connection portion 206d. The middle leg 206c is longer than the outer legs 206a, 206b which have the same length. The outer legs 206a, 206b are rigidly connected to the connection portion 206d and pivotably connected to the housing 207. When the rear underrun protection device 200 is mounted to a towing vehicle standing on horizontal ground, the legs 206a, 206b, 206c are in this case vertically spaced apart and the rod 205 is pivotably connected to the upper outer leg 206b.

The tiltable member 206 is connected to a locking member 208 (see the schematic Figures 6a to 6c), which in this case is a locking pin. The locking member 208 is arranged inside the housing 207. More specifically, in this case, an end of the middle leg 206c is pivotably connected to the locking member 208. The other end of the middle leg 206c is pivotably connected to the connection portion 206d.

The locking member 208 has an engaged position and a disengaged position. The engaged and disengaged positions correspond to different positions of the locking member 208 along an axis A. A longitudinal extension of the locking member 8 is in this case along the axis A. The axis A is substantially parallel to the rotation axis R of the arm 3. The locking member 208 is thus movable substantially parallel to the rotation axis R of the arm 3. The locking member 208, when in the engaged position, locks the arm 3 by engaging with the plate 8 and, when in the disengaged position, is positioned so that the arm 3 can rotate. As is illustrated in Figures 6a and 6c, when the locking member 208 is in the engaged position, an angle between the middle leg 206c and the axis A is in this case smaller than an angle between the outer legs 206a, 206b and the axis A.

The lever 204, rod 205 and tiltable member 206 may be seen as forming part of a transmission arrangement. The driver 201 and the transmission arrangement may be seen as forming part of an operating assembly. The operating assembly has a first point of engagement operatively connected to the locking member 208 and a second point of engagement with the arm 3. In this case, the first point of engagement is between the tiltable member 206 and the locking member 208. More precisely, the first point of engagement is between the middle leg 206c and the locking member 208. The second point of engagement is between the lever 204 and the arm 3.

It should be noted that the rear underrun protection 200 may, in a different example, comprise a biasing arrangement arranged such that the driver 201 experiences an increase in resistance when retracting and extending, the increase in resistance causing a transition from the first phase to the second phase (further discussed below). Such a biasing arrangement may for example comprise a spring which is arranged inside the housing 207 and which biases the locking member 208 towards the engaged position. Of course, the tiltable member 206, housing 207 and/or the locking member 207 may need to be slightly modified to accommodate such a spring. As another example, the biasing arrangement may include an elastic element, for example an elastic cushion, which is arranged such that the tiltable member 206 must be pushed passed the elastic element when pivoting from one side of the housing 207 to the other. Such an elastic element may for example be arranged at the axis A, a distance from the housing 207.

The operation of the rear underrun protection device 200 in Figures 5 to 6c during raising and lowering of the arm 3 will be described below with reference to three phases. It should be noted that the rear underrun protection device 200 in Figure 5 to 6c operates similarly to the rear underrun protection devices 1, 100 in Figures 1 to 4, and some of the similarities will not be discussed below, or only briefly discussed. It will be assumed that driver 201 is initially in the extended position and that the arm 3 is locked in the high position, as depicted in Figure 5.

In the first phase, the locking member 208 moves from the engaged position in Figure 6a to the disengaged position in Figure 6b. More specifically, the driver 201 retracts and pulls the first end portion 204a of the lever 204 in a direction away from the first end portion 3a of the arm 3. The second end portion 204b of the lever 204 moves towards the first end portion 3a of the arm 3. The rod 205 pulls the tiltable member 206, which causes the locking member 208 to move along the axis A, from the engaged position towards the disengaged position.

In the second phase, the locking member 208 is in the disengaged position in Figure 6b. The arm 3 rotates from the high position to the low position as the driver 201 continues to retract. A force to rotate the arm 3 is applied at the connection between the arm 3 and the lever 204. As is illustrated in Figure 6b, the legs 206a, 206b, 206c, 206d of the tiltable member 206 are in this case not aligned with the axis A while the arm 3 rotates. That position is typically more stable than the position where the legs 206a, 206b, 206c, 206d are aligned with the axis A. Eventually, the arm 3 reaches the low position and cannot rotate any further.

In the third phase, the driver 201 continues to retract. The lever 204, the rod 205, the tiltable member 206 and the locking member 208 move instead of the arm 3 since the arm 3 cannot rotate any further. The locking member 208 moves from the disengaged position in Figure 6b to the engaged position in Figure 6c. The arm 3 is now locked in the low position.

It can be understood from the foregoing that (i) the first point of engagement moves, during the first and third phases, substantially parallel to the rotation axis R of the arm 3, and (ii) the second point of engagement moves around the rotation axis R during the second phase. Further, it is clear that the driver 201 in this case is arranged to create a linear movement of a first point relative to a second point. The first point is located at the first end portion 201a and stationary relative to the plate 8. The second point is here located at the second end portion 201b and moves together with the arm 3 during the second phase.

With reference to Figures 7 and 8, a rear underrun protection device 300 according to a fourth embodiment of the present invention will be described. It should be noted that the rear underrun protection device in Figures 7 and 8 has many features in common with the rear underrun protection devices 1, 100, 200 in Figures 1 to 6c, and some of these features will not be discussed, or only briefly discussed, in the following. Moreover, many of the modifications and variations mentioned in the discussion above of the rear underrun protection devices 1, 100, 200 in Figures 1 to 6c are applicable also to the rear underrun protection device 300 in Figures 7 and 8.

The rear underrun protection device 300 comprises two support arms which are similar to those of the rear underrun protection devices 1, 100, 200 in Figures 1 to 6c. One of the two arms is shown in Figure 7 and designated by the reference numeral 3. The support arm 3 is rotatably mountable to a towing vehicle (not shown), in this case via a plate 8.

The rear underrun protection device 300 further comprises a driver 301 arranged to rotate the arm 3. Like the driver 201 of the rear underrun protection device 200 in Figures 5 to 6c, the driver 301 in Figures 7 and 8 is a linear actuator. The driver 301 is extendable and retractable. The driver 301 is arranged so as to move substantially parallel to a plane when extending and retracting. A first end portion 301a of the driver 301 is pivotably connected to the plate 8. A second end portion 301b of the driver 301 is provided with a space 301c in which a part of a locking member 302, here a locking pin, is received. The second end portion 301b here has a U-like cross section. The locking member 302 is movable between an engaged position, in which the locking member 302 locks the arm 3, and a disengaged position, in which the locking member 302 does not lock the arm 3. The engaged position and the disengaged position correspond to different positions of the locking member 302 along an axis A. The axis A is here substantially parallel to the axis of rotation R of the arm 3. The axis of rotation R of the arm 3 points out of the paper in Figure 7.

The locking member 302 is in this case operatively connected to a cam follower 303. The illustrated cam follower 303 has an elongated shape and is arranged transversely with respect to the longitudinal extension of the locking member 302. The cam follower 303 here passes through a hole in the locking member 302. The cam follower 303 engages two cam surfaces 301d operatively connected to the driver 301. The cam surfaces 301d are arranged in the second end portion 301b of the driver 301 on opposite sides of the space 301c. Specifically, each cam surface 301d is arranged in a side wall 301e of the driver 301. The side walls 301e are here substantially parallel with the axis of rotation R of the arm 3. Having two such cam surfaces 301d helps to improve the stability of the movement of the cam follower 303. However, it is conceivable to use a single cam surface. The cam surfaces 301d have the same shape. The shape of the cam surfaces 301d is in this case generally similar to a V. As can be seen in Figure 8, each "leg" of the cam surfaces 301d here comprises two portions that are inclined relative to each other. The purpose of providing the cam surfaces 301d with such inclined portions was explained in the discussion of the rear underrun protection device 1 in Figures 1a to 3b.

The rear underrun protection device 300 further comprises an optional biasing arrangement 304. The biasing arrangement 304 is here arranged to bias the locking member 302 towards the engaged position. The biasing arrangement 304 comprises in this case a spring. The spring is slidably arranged between the driver 301 and an end of the locking member 302.

The cam surface 301d and the cam follower 303 may be seen as forming part of a transmission arrangement. The driver 301, the locking member 302, the biasing arrangement 304 and the transmission arrangement may be seen as forming part of an operating assembly. The operating assembly has first points of engagement operatively connected to the locking member 302 and a second point of engagement with the arm 3. In this case, the first points of engagement are between the cam surfaces 301d and the cam follower 303. The first points of engagement are operatively connected to the locking member 302 via the cam follower 303. The second point of engagement is between the locking member 302 and the arm 3.

The operation of the rear underrun protection device 300 in Figures 7 and 8 during raising and lowering of the arm 3 will now be described below with respect to three phases. It should be noted that the rear underrun protection device 300 in Figures 7 and 8 operates similarly to the rear underrun protection devices 1, 100, 200 in Figures 1 to 6c, and some of the similarities will not be discussed below, or only briefly discussed. For the purpose of the discussion below, it will be assumed that the arm 3 is initially locked in the low position by the locking member 302, the driver 301 is in its retracted position and the cam follower 303 is positioned relative to the cam surfaces 301d as shown in Figure 8.

In the first phase, the driver 301 extends in the direction D (see Figure 8) which is substantially transverse to the axis A. The cam follower 303 rides on the cam surface 301d. The locking member 302 moves along the axis A (upwards in Figure 8), from the engaged position to the disengaged position.

In the second phase, the driver 301 continues to extend. The locking member 302 pushes the arm 3 to rotate from the low position to the high position. The cam follower 303 does not move, or moves only a little, along the cam surfaces 301d during the second phase.

In the third phase, the driver 301 continues to extend. The cam follower 303 rides on the cam surface 301d, and the locking member 302 moves to the engaged position.

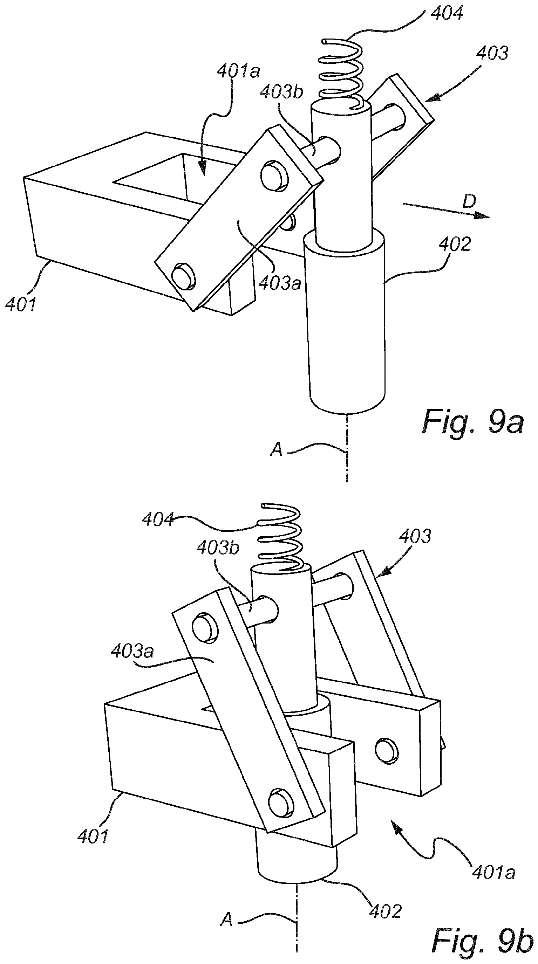

Figure 9a and 9b show a part of a driver 401 which is a linear actuator. The driver 401 is similar to the driver 301 of the rear underrun protection device 300 in Figures 7 and 8. However, unlike the driver 301 in Figures 7 and 8, the driver 401 and the locking member 402, here a locking pin, are not connected to each other via a cam-and-follower mechanism. Instead, the driver 401 and the locking member 402 are connected via a linking member 403. The linking member 403 is pivotably connected to the driver 401 and to the locking member 402.

The illustrated linking member 403 comprises two side parts 403a and a connecting part 403b connecting the side parts 403a. The side parts 403a are pivotably connected to the driver 401 on opposite sides of a space 401a formed in the driver 401. The locking member 402 is arranged so as to be able to move into and out of the space 401a when the driver 401 extends and retracts. The connecting part 401b is here pivotably connected to the side parts 403a and to the locking member 402. In this case, the connecting part 403b passes through a hole in the locking member 402. The connecting part 403b is here arranged transversely with respect to the longitudinal extension of the locking member 402. The longitudinal extension of the locking member 402 is in this case along the axis A.

A biasing arrangement 404 biases the locking member 402 towards the engaged position. The biasing arrangement 404 here comprises a spring. The locking member 402 is shown in the engaged position in Figures 9a and 9b. The disengaged position of the locking member 402 corresponds to an intermediate positon relative to the positions in Figures 9a and 9b. That is to say, the disengaged position of the locking member 402 corresponds to a position where the driver 401 has moved away from the position in Figure 9a by a certain distance in the direction D, but not yet reached the position in Figure 9b. When the locking member 402 is in the disengaged position, the side parts 403a are more aligned with the axis A than in Figures 9a and 9b. Depending on the application, the side parts 403a may or may not be completely aligned with the axis A when the locking member 402 is in the disengaged position. In either case, however, the disengaged position of the locking member 402 corresponds to a higher position along the axis A in Figures 9a and 9b than the positions shown therein.

The linking member 403 may be seen as forming part of a transmission arrangement. The driver 401, the locking member 402, the biasing arrangement 404 and the transmission arrangement may be seen as forming part of an operating assembly. The operating assembly has a first point of engagement operatively connected to the locking member 402 and a second point of engagement with the arm 3. The first point of engagement is here between the linking member 403 and the locking member 402. More precisely, the first point of engagement is between the connecting part 403b and the locking member 402. The second point of engagement is here between the locking member 402 and the arm 3.

It will now be explained how extension and retraction of the driver 401 moves the locking member 402 between its engaged and disengaged positions and raises and lowers the arm 3. It is noted that the driver 401 in Figures 9a and 9b operates in a manner similar to that of the driver 301 of the rear underrun protection device 300 in Figures 7 and 8. It will be assumed that the driver 401 and the locking member 402 are initially positioned as in Figure 9a.

In the first phase, the driver 401 starts to extend in the direction D (see Figure 9a). The driver 401 is arranged so as to move substantially parallel to a plane when extending (and retracting). The linking member 403 moves and pushes the locking member 402 along the axis A (upwards in Figure 9A), away from the engaged position.

In the second phase, the locking member 402 is in the disengaged position. The driver 401 continues to extend, thereby causing the locking member 402 to push the arm 3 to rotate.

In the third phase, the arm 3 cannot be rotated any further and the continued extension of the driver 401 causes the linking member 403 and locking member 402 to move until reaching the positions shown in Figure 9b. The locking member 402 has then reached the engaged position and locks the arm 3.

The person skilled in the art realizes that the present invention by no means is limited to the preferred embodiments described above. On the contrary, many modifications and variations are possible within the scope of the appended claims. For example, although the above-described bar 2 and arms 3 are separate parts, these components can be formed in one piece. Further, the rear underrun protection device may have a single motor which drives both arms 3, 3' instead of one motor for each arm 3, 3'. Still further, the rear underrun protection device may include means for moving the arms 3, 3' manually, such as a handle by which the driver may raise and lower the arms 3, 3'. In such case, the motor(s) may be omitted.

In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A rear underrun protection device (1; 100; 200; 300) for a towing vehicle (20), the rear underrun protection device (1; 100; 200; 300) comprising:
an impact bar (2) intended to be arranged such that a longitudinal extension of the impact bar (2) extends laterally with respect to the towing vehicle (20);
two support arms (3, 3'), each arm (3, 3') having a first end portion (3a, 3a') mounted to the impact bar (2) on different sides of a longitudinal center of the impact bar (2) and a second end portion (3b, 3b') intended to be rotatably connected to the towing vehicle (20) so that the support arms (3, 3') are rotatable around an axis of rotation (R); and
at least one locking member (12; 104; 208; 302; 402) configured to move between an engaged position, in which the locking member (12; 104; 208; 302; 402) is intended to engage a structure of the towing vehicle (20), and a disengaged position, in which the locking member (12; 104; 208; 302; 402) is intended to be disengaged from the towing vehicle (20), the locking member (12; 104; 208; 302; 402), when in use and in the engaged position, being adapted to lock one of the support arms (3, 3') in a first position, in which the impact bar (2) is positioned to prevent another vehicle from running under the towing vehicle (20) during a collision, and in a second position, in which the impact bar (2) is positioned to allow a trailer to be connected to the towing vehicle (20),
**characterized by**
an operating assembly having a first point of engagement operatively connected to the locking member (12; 104; 208; 302; 402) and a second point of engagement with said one of the support arms (3, 3'), the operating assembly comprising
a driver (9; 201; 301; 401) movable in a uniform direction and
a transmission arrangement configured to, upon a uniform movement of the driver (9; 201; 301; 401):
in a first phase, move the first point of engagement substantially parallel to said axis of rotation (R), to move the locking member (12; 104; 208; 302; 402) to its disengaged position;
in a second phase, move the second point of engagement around said axis of rotation (R), to bring said one of the support arms (3, 3') to rotate between said first and second positions; and
in a third phase, move the first point of engagement substantially parallel to said axis of rotation (R), to return the locking member (12; 104; 208; 302; 402) to its engaged position.

2. The rear underrun protection device (1; 100; 200; 300) according to claim 1, wherein the operating assembly is adapted such that the driver (9; 201; 301; 401) experiences an increase in resistance during said uniform movement, the increase in resistance causing the transmission arrangement to transition from the first phase to the second phase.

3. The rear underrun protection device (1; 100; 200; 300) according to claim 1 or 2, wherein the operating assembly comprises a biasing arrangement (13, 14; 105; 304; 404) adapted to bias the locking member (12; 104; 208; 302; 402) towards the engaged position.

4. The rear underrun protection device (1; 100; 200; 300) according to any of the preceding claims, wherein the locking member (12; 104; 208; 302; 402) is a locking pin movable substantially parallel to said axis of rotation (R).

5. The rear underrun protection device (1; 300) according to any of the preceding claims, wherein the locking member (12; 302; 402) forms part of the operating assembly, and the locking member (12; 302; 402) provides the second point of engagement.

6. The rear underrun protection device (1; 100; 300) according to anyone of the preceding claims, wherein the locking member (12; 104; 302) is operatively connected to a cam follower (10; 303), and the driver (9; 301) is operatively connected to a cam surface (9c; 301d) providing the first point of engagement.

7. The rear underrun protection device (300) according to claims 3 and 6, wherein the cam surface (301d) has portions which are inclined relative to each other such that the cam surface (301d) cooperates with the biasing arrangement (304) to provide said increase in resistance.

8. The rear underrun protection device (1; 100; 300) according to claim 6 or 7, wherein the driver (9; 301) has a side wall (9a; 301e) substantially parallel with said axis of rotation (R), and the cam surface (9c; 301d) is formed in the side wall (9a; 301e).

9. The rear underrun protection device (1; 100) according to any one of the preceding claims, wherein the driver (9) is rotatable around a driver rotation axis (R') substantially parallel to said axis of rotation (R).

10. The rear underrun protection device (1) according to claim 9, wherein the locking member (12) and the cam follower (10) are integrated with an annular part (11) coaxial with said driver rotation axis (R').

11. The rear underrun protection device (100) according to claim 9, wherein the operating assembly comprises a ring gear (101 d) rotatable around said driver rotation axis (R'), wherein the ring gear (101 d) is engaged with a gear member (102) adapted to be fixed to said structure of the towing vehicle (20), wherein the ring gear (101d) is arranged so that said driver rotation axis (R') moves when the ring gear (101 d) rotates, and wherein the second point of engagement is located along said driver rotation axis (R').

12. The rear underrun protection device (100) according to claim 11, wherein the ring gear (101d) forms part of a planetary gear set (101) connected to move the ring gear (101d) in a direction opposite to the rotational movement of the driver (9).

13. The rear underrun protection device (200; 300) according to any one of the claims 1 to 8, wherein the driver (201; 301; 401) is a linear actuator.

14. The rear underrun protection device (200; 300) according to claim 13, wherein the driver (201; 301; 401) is arranged to create a linear movement of a first point relative to a second point, the first point being intended to be stationary relative to said structure of the towing vehicle, and the second point being arranged to move together with said one of the support arms during the second phase.

15. A towing vehicle (20) comprising a rear underrun protection device (1; 100; 200; 300) according to any one of the preceding claims.

## Patentansprüche

1. Heckunterfahrschutzvorrichtung (1; 100; 200; 300) für ein Zugfahrzeug (20), die Heckunterfahrschutzvorrichtung (1; 100; 200; 300) umfassend:
einen Rammbügel (2), der dazu bestimmt ist, so angeordnet zu werden, dass sich eine Längserstreckung des Rammbügels (2) seitlich zum Zugfahrzeug (20) erstreckt;
zwei Tragarme (3, 3'), wobei jeder Arm (3, 3') einen ersten Endabschnitt (3a, 3a'), der auf verschiedenen Seiten einer Längsmitte des Rammbügels (2) am Rammbügel (2) befestigt ist, und einen zweiten Endabschnitt (3b, 3b') aufweist, der dazu bestimmt ist, drehbar mit dem Zugfahrzeug (20) verbunden zu werden, so dass die Tragarme (3, 3') um eine Drehachse (R) drehbar sind; und
mindestens ein Verriegelungselement (12; 104; 208; 302; 402), das konfiguriert ist, um sich zwischen einer eingerückten Position zu bewegen, in der das Verriegelungselement (12; 104; 208; 302; 402) eine Struktur des Zugfahrzeugs einrasten soll (20), und eine ausgerückte Position, in der das Verriegelungselement (12; 104; 208; 302; 402) vom Zugfahrzeug (20) gelöst werden soll, wobei das Verriegelungselement (12; 104; 208; 302; 402) bei Verwendung und in Eingriffsstellung so ausgelegt ist, einen der Tragarme (3, 3') in einer ersten Stellung zu verriegeln, in der der Rammbügel (2) so positioniert ist, um zu verhindern, dass ein anderes Fahrzeug während eines Zusammenstoßes unter das Zugfahrzeug (20) fährt, und in einer zweiten Position, in der der Rammbügel (2) so positioniert ist, dass ein Anhänger mit dem Zugfahrzeug (20) verbunden werden kann,
**gekennzeichnet durch**
eine Betätigungsanordnung, die einen ersten Eingriffspunkt, der mit dem Verriegelungselement (12; 104; 208; 302; 402) betriebsmäßig verbunden ist, und einem zweiten Eingriffspunkt mit dem einen der Tragarme (3, 3') aufweist, die Betätigungsanordnung umfassend
einen Mitnehmer (9; 201; 301; 401), der in einer einheitlichen Richtung bewegbar ist, und
eine Getriebeanordnung, die so konfiguriert ist, um bei einer gleichförmigen Bewegung des Mitnehmers (9; 201; 301; 401):
in einer ersten Phase den ersten Eingriffspunkt im Wesentlichen parallel zu der Drehachse (R) zu bewegen, um das Verriegelungselement (12; 104; 208; 302; 402) in seine ausgerückte Position zu bewegen;
in einer zweiten Phase den zweiten Eingriffspunkt um die Drehachse (R) zu bewegen, um den einen der Tragarme (3, 3') zwischen der ersten und der zweiten Position zu drehen; und
in einer dritten Phase den ersten Eingriffspunkt im Wesentlichen parallel zu der Drehachse (R) zu bewegen, um das Verriegelungselement (12; 104; 208; 302; 402) in seine Eingriffsposition zurückzubringen.

2. Heckunterfahrschutzvorrichtung (1; 100; 200; 300) nach Anspruch 1, wobei die Betätigungseinheit so ausgelegt ist, dass der Mitnehmer (9; 201; 301; 401) während der gleichförmigen Bewegung einen Anstieg des Widerstands erfährt, wobei der Anstieg des Widerstands verursacht, dass die Getriebeanordnung von der ersten Phase zur zweiten Phase übergeht.

3. Heckunterfahrschutzvorrichtung (1; 100; 200; 300) nach Anspruch 1 oder 2, wobei die Betätigungsanordnung eine Vorspannanordnung (13, 14; 105; 304; 404) umfasst, die ausgelegt ist, um das Verriegelungselement (12; 104; 208; 302; 402) in Richtung der Eingriffsposition vorzuspannen.

4. Heckunterfahrschutzvorrichtung (1; 100; 200; 300) nach einem der vorhergehenden Ansprüche, wobei das Verriegelungselement (12; 104; 208; 302; 402) ein Verriegelungsstift ist, der im Wesentlichen parallel zu der Drehachse (R) bewegbar ist.

5. Heckunterfahrschutzvorrichtung (1; 300) nach einem der vorhergehenden Ansprüche, wobei das Verriegelungselement (12; 302; 402) einen Teil der Betätigungsanordnung bildet und das Verriegelungselement (12; 302; 402) den zweiten Eingriffspunkt bereitstellt.

6. Heckunterfahrschutzvorrichtung (1; 100; 300) nach einem der vorhergehenden Ansprüche, wobei das Verriegelungselement (12; 104; 302) betriebsmäßig mit einem Nockenstößel (10; 303) verbunden ist und der Mitnehmer (9; 301) betriebsmäßig mit einer Nockenfläche (9c; 301d) verbunden ist, die den ersten Eingriffspunkt bereitstellt.

7. Heckunterfahrschutzvorrichtung (300) nach den Ansprüchen 3 und 6, wobei die Nockenfläche (301d) Abschnitte aufweist, die relativ zueinander geneigt sind, so dass die Nockenfläche (301d) mit der Vorspannanordnung (304) zusammenwirkt, um den Anstieg des Widerstands bereitzustellen.

8. Heckunterfahrschutzvorrichtung (1; 100; 300) nach Anspruch 6 oder 7, wobei der Mitnehmer (9; 301) eine Seitenwand (9a; 301e) aufweist, die im Wesentlichen parallel zu der Drehachse (R) ist, und die Nockenfläche (9c; 301d) in der Seitenwand (9a; 301e) ausgebildet ist.

9. Heckunterfahrschutzvorrichtung (1; 100) nach einem der vorhergehenden Ansprüche, wobei der Mitnehmer (9) um eine Mitnehmerdrehachse (R') im Wesentlichen parallel zu der Drehachse (R) drehbar ist.

10. Heckunterfahrschutzvorrichtung (1) nach Anspruch 9, wobei das Verriegelungselement (12) und der Nockenstößel (10) mit einem ringförmigen Teil (11) koaxial zu der Mitnehmerdrehachse (R') integriert sind.

11. Heckunterfahrschutzvorrichtung (100) nach Anspruch 9, wobei die Betätigungsanordnung ein Zahnrad (101d) aufweist, das um die Mitnehmerdrehachse (R') drehbar ist, wobei das Zahnrad (101d) mit einem Zahnradelement (102) in Eingriff steht, das so ausgelegt ist, um an der Struktur des Zugfahrzeugs (20) befestigt zu werden, wobei das Zahnrad (101d) so angeordnet ist, dass sich die Mitnehmerdrehachse (R') bewegt, wenn sich das Zahnrad (101d) dreht, und wobei der zweite Eingriffspunkt entlang der Mitnehmerdrehachse (R') angeordnet ist.

12. Heckunterfahrschutzvorrichtung (100) nach Anspruch 11, wobei das Zahnrad (101d) Teil eines Planetengetriebes (101) ist, das verbunden ist, um das Zahnrad (101d) in eine Richtung zu bewegen, die der Drehbewegung des Mitnehmers (9) entgegengesetzt ist.

13. Heckunterfahrschutzvorrichtung (200; 300) nach einem der Ansprüche 1 bis 8, wobei der Mitnehmer (201; 301; 401) ein Linear-Aktuator ist.

14. Heckunterfahrschutzvorrichtung (200; 300) nach Anspruch 13, wobei der Mitnehmer (201; 301; 401) angeordnet ist, um eine lineare Bewegung eines ersten Punkts relativ zu einem zweiten Punkt zu erzeugen, wobei der erste Punkt relativ zu der Struktur des Zugfahrzeugs bestimmt ist, stationär zu sein, und der zweite Punkt so angeordnet ist, dass er sich während der zweiten Phase zusammen mit dem einen der Tragarme bewegt.

15. Zugfahrzeug (20) umfassend eine
Heckunterfahrschutzvorrichtung (1; 100; 200; 300) nach einem der vorhergehenden Ansprüche.

## Revendications

1. Dispositif de protection anti-encastrement arrière (1 ; 100 ; 200 ; 300) pour un véhicule de remorquage (20), le dispositif de protection anti-encastrement arrière (1 ; 100 ; 200 ; 300) comprenant :
une barre d'impact (2) destinée à être agencée de telle façon qu'une extension longitudinale de la barre d'impact (2) s'étende latéralement par rapport au véhicule de remorquage (20) ;
deux bras de support (3, 3'), chaque bras (3, 3') ayant une première partie d'extrémité (3a, 3a') montée sur la barre d'impact (2) sur différents côtés d'un centre longitudinal de la barre d'impact (2) et une seconde partie d'extrémité (3b, 3b') destinée à être reliée en rotation au véhicule de remorquage (20) de façon à ce que les bras de support (3, 3') soient rotatifs sur un axe de rotation (R) ; et
au moins un membre de verrouillage (12 ; 104 ; 208 ; 302 ; 402) configuré pour se déplacer entre une position engagée dans laquelle le membre de verrouillage (12 ; 104 ; 208 ; 302 ; 402) est destiné à engager une structure du véhicule de remorquage (20), et une position désengagée dans laquelle le membre de verrouillage (12 ; 104 ; 208 ; 302 ; 402) est destiné à être désengagé du véhicule de remorquage (20), le membre de verrouillage (12 ; 104 ; 208 ; 302 ; 402), en utilisation et dans la position engagée, étant adapté pour verrouiller un des bras de support (3, 3') dans une première position dans laquelle la barre d'impact (2) est positionnée pour empêcher un autre véhicule de passer sous le véhicule de remorquage (20) durant une collision, et dans une seconde position dans laquelle la barre d'impact (2) est positionnée pour permettre à une remorque d'être reliée au véhicule de remorquage (20),
**caractérisé par**
un montage de fonctionnement ayant un premier point d'engagement relié de manière opérationnelle au membre de verrouillage (12 ; 104 ; 208 ; 302 ; 402) et un second point d'engagement avec ledit un des bras de support (3, 3'), le montage de fonctionnement comprenant
un entraînement (9 ; 201 ; 301 ; 401) mobile dans une direction uniforme et
un agencement de transmission configuré pour, sur un mouvement uniforme de l'entraînement (9 ; 201 ; 301 ; 401) :
dans une première phase, déplacer le premier point d'engagement essentiellement parallèlement audit axe de rotation (R), pour déplacer le membre de verrouillage (12 ; 104 ; 208 ; 302 ; 402) vers sa position désengagée ;
dans une deuxième phase, déplacer le second point d'engagement sur ledit axe de rotation (R), pour amener ledit un des bras de support (3, 3') à tourner entre lesdites première et seconde positions ; et
dans une troisième phase, déplacer le premier point d'engagement essentiellement parallèlement audit axe de rotation (R), pour renvoyer le membre de verrouillage (12 ; 104 ; 208 ; 302 ; 402) vers sa position engagée.

2. Dispositif de protection anti-encastrement arrière (1 ; 100 ; 200 ; 300) selon la revendication 1, dans lequel le montage de fonctionnement est adapté de telle façon que l'entraînement (9 ; 201 ; 301 ; 401) expérimente une augmentation de résistance durant ledit mouvement uniforme, l'augmentation de résistance faisant que l'agencement de transmission passe de la première phase à la deuxième phase.

3. Dispositif de protection anti-encastrement arrière (1 ; 100 ; 200 ; 300) selon la revendication 1 ou 2, dans lequel le montage de fonctionnement comprend un agencement de décalage (13, 14 ; 105 ; 304 ; 404) adapté pour décaler le membre de verrouillage (12 ; 104 ; 208 ; 302 ; 402) vers la position engagée.

4. Dispositif de protection anti-encastrement arrière (1 ; 100 ; 200 ; 300) selon l'une quelconque des revendications précédentes, dans lequel le membre de verrouillage (12 ; 104 ; 208 ; 302 ; 402) est une broche de verrouillage mobile essentiellement parallèlement audit axe de rotation (R) .

5. Dispositif de protection anti-encastrement arrière (1 ; 300) selon l'une quelconque des revendications précédentes, dans lequel le membre de verrouillage (12 ; 302 ; 402) fait partie du montage de fonctionnement, et le membre de verrouillage (12 ; 302 ; 402) fournit le second point d'engagement.

6. Dispositif de protection anti-encastrement arrière (1 ; 100 ; 300) selon l'une quelconque des revendications précédentes, dans lequel le membre de verrouillage (12 ; 104 ; 302) est relié de manière opérationnelle à un galet de poussoir (10 ; 303), et l'entraînement (9 ; 301) est relié de manière opérationnelle à une surface de came (9c ; 301d) fournissant le premier point d'engagement.

7. Dispositif de protection anti-encastrement arrière (300) selon les revendications 3 et 6, dans lequel la surface de came (301d) a des parties qui sont inclinées l'une par rapport à l'autre de telle façon que la surface de came (301d) coopère avec l'agencement de décalage (304) pour fournir ladite augmentation de résistance.

8. Dispositif de protection anti-encastrement arrière (1 ; 100 ; 300) selon la revendication 6 ou 7, dans lequel l'entraînement (9 ; 301) a une paroi latérale (9a ; 301e) essentiellement parallèle audit axe de rotation (R), et la surface de came (9c ; 301d) est formée dans la paroi latérale (9a ; 301e).

9. Dispositif de protection anti-encastrement arrière (1 ; 100) selon l'une quelconque des revendications précédentes, dans lequel l'entraînement (9) est rotatif sur un axe de rotation d'entraînement (R') essentiellement parallèle audit axe de rotation (R).

10. Dispositif de protection anti-encastrement arrière (1) selon la revendication 9, dans lequel le membre de verrouillage (12) et le galet de poussoir (10) sont intégrés avec une partie annulaire (11) coaxiale audit axe de rotation d'entraînement (R').

11. Dispositif de protection anti-encastrement arrière (100) selon la revendication 9, dans lequel l'ensemble de fonctionnement comprend une couronne dentée (101d) rotative sur ledit axe de rotation d'entraînement (R'), dans lequel la couronne dentée (101d) est engagée avec un membre d'engrenage (102) adapté pour être fixé à ladite structure du véhicule de remorquage (20), dans lequel la couronne dentée (101d) est agencée de façon à ce que ledit axe de rotation d'entraînement (R') se déplace lorsque la couronne dentée (101d) tourne, et dans lequel le second point d'engagement est situé le long dudit axe de rotation d'entraînement (R').

12. Dispositif de protection anti-encastrement arrière (100) selon la revendication 11, dans lequel la couronne dentée (101d) fait partie d'un jeu d'engrenages planétaires (101) reliés pour déplacer la couronne dentée (101d) dans une direction opposée au mouvement de rotation de l'entraînement (9).

13. Dispositif de protection anti-encastrement arrière (200 ; 300) selon l'une quelconque des revendications 1 à 8, dans lequel l'entraînement (201 ; 301 ; 401) est un actionneur linéaire.

14. Dispositif de protection anti-encastrement arrière (200 ; 300) selon la revendication 13, dans lequel l'entraînement (201 ; 301 ; 401) est agencé pour créer un mouvement linéaire d'un premier point par rapport à un second point, le premier point étant destiné à être fixe par rapport à ladite structure du véhicule de remorquage, et le second point étant agencé pour se déplacer conjointement avec ledit un des bras de support pendant la seconde phase.

15. Véhicule de remorquage (20) comprenant un dispositif de protection anti-encastrement arrière (1 ; 100 ; 200 ; 300) selon l'une quelconque des revendications précédentes.
